# EUROPÄISCHE PATENTSCHRIFT

(11) **EP 3 812 210 B1**
(45) Veröffentlichungstag und Bekanntmachung des Hinweises auf die Patenterteilung: **03.07.2024**
(21) Anmeldenummer: 20202553.2
(22) Anmeldetag: 19.10.2020
(51) Int. Cl.: B60Q 1/50, B60Q 1/34, B60Q 1/44, F21S 41/153, F21S 43/14

(54) **BELEUCHTUNGSEINRICHTUNG FÜR EIN KRAFTFAHRZEUG UND KRAFTFAHRZEUG**
MOTOR VEHICLE AND LIGHTING DEVICE FOR A MOTOR VEHICLE
DISPOSITIF D'ÉCLAIRAGE POUR UN VÉHICULE AUTOMOBILE ET VÉHICULE AUTOMOBILE

(30) Priorität: 21.10.2019 DE 102019128357
(43) Veröffentlichungstag der Anmeldung: 28.04.2021
(73) Patentinhaber: Marelli Automotive Lighting Reutlingen (Germany) GmbH, 72762 Reutlingen (DE)
(72) Erfinder: Buchberger, Christian, 72770 Reutlingen (DE); Brill, Johannes, 70567 Stuttgart (DE); Bez, Benedikt, 72070 Tübingen (DE)
(74) Vertreter: DREISS Patentanwälte PartG mbB

(56) Entgegenhaltungen:
- EP-A1- 2 927 569
- DE-A1- 3 916 875
- DE-A1-102013 221 743
- DE-A1-102016 123 085
- DE-A1-102017 120 532
- DE-U1-202011 000 267
- GB-A- 2 531 084
- US-A1- 2019 315 271
- US-B1- 6 520 669

## Beschreibung

Die Erfindung betrifft eine Beleuchtungseinrichtung für ein Kraftfahrzeug und ein Kraftfahrzeug.

Aktuelle Studien rechnen mit den ersten autonom fahrenden Fahrzeugen bis 2025. Es werden Lösungen zur technischen Realisierbarkeit der Fahrfunktionen erarbeitet.

Zur Realisierung von Displays sind verschiedene Techniken (LCD, TFT, OLED) bekannt. Diese Technologien ermöglichen Displays in hoher Auflösung, allerdings nur mit relativ kleinen Leuchtdichten. Typisch sind Leuchtdichten bis zu 500 cd/m2. Gerade bei heller Umgebung sind derartige Displays kaum mehr ablesbar. Ebenso ist die mit diesen Technologien erreichbare Intensität für eine Signalwirkung im Kraftfahrzeugbereich unzureichend. So erreichen Tagfahrleuchten im Kraftfahrzeug bis zu 180.000 cd/m2, Begrenzungsleuchten bis zu 2000 cd/m2. Für den Einsatz als Signalleuchte sind damit derartige Anzeigen ungeeignet. Darüber hinaus ist die Auflösung dieser Displays hoch für eine erhöhte Entfernung des Betrachters und nicht mehr wahrnehmbar und deshalb nicht nötig für den Betrachter.

Aus der DE 2017 120 532 A1, US 2019/0315271 A1, GB 2531084 A sind Beleuchtungseinrichtungen bekannt, bei denen RGB-Lichtquellen zum Erzeugen von verschieden farbigen Leuchtenfunktionen verwendet werden.

Deshalb ist es Aufgabe der Erfindung, eine Beleuchtungseinrichtung bereitzustellen, die es insbesondere ermöglicht, dass das Fahrzeug mit seiner Umgebung visuell kommunizieren kann, also Signalisierungsfunktionen bereitstellt.

Die der Erfindung zugrunde liegende Aufgabe wird durch eine Beleuchtungseinrichtung gemäß dem Anspruch 1 sowie ein Kraftfahrzeug nach einem nebengeordneten Anspruch gelöst. Vorteilhafte Weiterbildungen finden sich in den Unteransprüchen, sowie ferner in der nachfolgenden Beschreibung und in den Figuren.

Ein erster Aspekt der Beschreibung betrifft eine flächige Beleuchtungseinrichtung für ein insbesondere autonom oder teilautonom fahrbares Kraftfahrzeug, wobei die flächige Beleuchtungseinrichtung einen gemeinsamen flächigen Träger und eine Mehrzahl von auf dem gemeinsamen flächigen Träger angeordneten Bildpunkten umfasst, wobei ein jeweiliger der Bildpunkte umfasst: Ein individuell ansteuerbares erstes Halbleiterlichtquellenelement, welches zur Abstrahlung von Licht mit einer Farbe, welche insbesondere den autonomen oder teilautonomen Fahrzustand des Kraftfahrzeugs anzeigt, ausgebildet ist, und ein individuell ansteuerbares und zur Abstrahlung von rotem oder gelbem Licht ausgebildetes zweites Halbleiterlichtquellenelement.

Es wird also eine technische Realisierung einer Beleuchtungseinrichtung bereitgestellt, welche auch als Kommunikationseinheit fungiert und auf Basis von LEDs, vorzugsweise mit kleiner Bauform, d.h. Mikro-LEDs, aufgebaut ist. Die Beleuchtungseinrichtung übernimmt also zugleich Kommunikations- und Leuchtenfunktion. Die Beleuchtungseinrichtung stellt Signalfarben auf einem relativ kleinen Bauraum bereit. Dies wird beispielsweise dadurch ermöglicht, dass der erreichbare Farbraum auf Farben eingeschränkt wird, die mit Signalfarben verbunden sind.

Es wird insbesondere für die Kommunikation von autonom oder teilautonom fahrenden Kraftfahrzeugen mit anderen Verkehrsteilnehmern eine Anzeigeeinheit zur Anbringung an dem Kraftfahrzeug bereitgestellt, über die Informationen ausgegeben werden können. Die Beleuchtungseinrichtung ist für die Sicherheit wichtig und stellt die angezeigten Inhalte zuverlässig erkennbar dar. Besonders kritisch sind im Fahrzeugbereich sehr helle Umgebungen, die die Beleuchtungseinrichtung überstrahlen könnten.

Vorteilhaft wird eine Beleuchtungseinrichtung bereitgestellt, welche für die jeweils gewünschte Signalisierungsfunktion beispielsweise matrixartig ansteuerbar ist. Das bedeutet, dass in der bereitgestellten Auflösung beliebig viele Bildpunkte an- bzw. ausgeschaltet werden können. Insbesondere können so Symbole oder Schriftzüge in der gewünschten Farbe, insbesondere auch animiert dargestellt werden.

Darüber hinaus wird durch die bereitgestellte Beleuchtungseinrichtung ermöglicht, dass intensives Licht mit der gewünschten Signalfarbe abgestrahlt wird, welches den jeweiligen Vorschriften wie beispielsweise der jeweiligen ECE- oder SAE-Vorschrift genügt. Insbesondere muss in einem Beispiel für die Farbe Gelb keine Farbmischung unter Zuhilfenahme mehrerer Halbleiterlichtquellen vorgenommen werden.

Auch wird über hohe Temperaturbereiche hinweg ein nahezu gleiches Farbbild erzeugt. Dies liegt daran, dass die tatsächlichen Signalfarben zu einem großen Teil oder allein von dem jeweiligen hierfür zuständigen Halbleiterlichtquellenelement erzeugt werden. Temperaturabhängige Farbänderungseffekte, welche beispielsweise durch eine Mischung mehrerer etwa gleich hell leuchtender aber einer Temperaturdrift unterliegender Halbleiterlichtquellenelemente erzeugt werden, werden für die Signalisierungsfunktionen damit verhindert.

Die verwendeten Halbleiterlichtquellenelemente sind beispielsweise Mini- oder Mikro-LEDs. Eine Leiterplatte im Sinne des Trägers wird mit diesen Halbleiterlichtquellen bestückt.

Nicht zuletzt erhöht die vorgeschlagene Signalisierung eines autonomen oder teilautonomen Fahrzustandes des Kraftfahrzeugs die Akzeptanz der anderen Verkehrsteilnehmer und der Gesellschaft insgesamt hinsichtlich dieser neuen Technologie.

Ein erfindungsgemäßes Beispiel zeichnet sich dadurch aus, dass die Farbe, welche den autonomen oder teilautonomen Fahrzustand des Kraftfahrzeugs anzeigt, Türkis oder Cyan ist.

Die Farben Türkis und Cyan sind aufgrund der geringen Verwechslungsgefahr mit anderen am Fahrzeug verwendbaren Signalfarben geeignet, um den autonomen oder teilautonomen Fahrzustand zu signalisieren.

Ein erfindungsgemäßes Beispiel zeichnet sich dadurch aus, dass ein jeweiliger der Bildpunkte umfasst: ein individuell ansteuerbares und zur Abstrahlung von gelbem oder rotem Licht ausgebildetes weiteres Halbleiterlichtquellenelement.

Vorteilhaft ist diese Beleuchtungseinrichtung für den Rückbereich des Kraftfahrzeugs nutzbar, soweit sie beispielhaft pixelweise die Farben Türkis oder Cyan, Gelb und Rot erzeugt.

Ein vorteilhaftes Beispiel zeichnet sich dadurch aus, dass ein jeweiliger der Bildpunkte umfasst: ein individuell ansteuerbares und zur Abstrahlung von blauem Licht ausgebildetes zusätzliches Halbleiterlichtquellenelement.

Vorteilhaft ist diese Beleuchtungseinrichtung für den Frontbereich des Kraftfahrzeugs nutzbar, soweit sie beispielhaft pixelweise die Farben Türkis oder Cyan, Gelb und Blau erzeugt.

Ein vorteilhaftes Beispiel zeichnet sich dadurch aus, dass die Halbleiterlichtquellenelemente jeweils einzeln dimmbar ausgebildet sind.

Dadurch ergibt sich der Vorteil, den pixelweise erreichbaren Farbraum zu erweitern.

Ein vorteilhaftes Beispiel zeichnet sich dadurch aus, dass die Beleuchtungseinrichtung derart eingerichtet ist, dass wenigstens ein Teil der Bildpunkte zur Anzeige einer Blinkleuchtenfunktion eine Aktivierung des jeweiligen zur Abstrahlung von gelbem Licht ausgebildeten Halbleiterlichtquellenelements und eine Deaktivierung des jeweiligen zur Abstrahlung von rotem Licht ausgebildeten Halbleiterlichtquellenelements bzw. insbesondere eine Aktivierung des jeweiligen zur Abstrahlung von rotem Licht ausgebildeten Halbleiterlichtquellenelements mit gegenüber dem gelbes Licht abstrahlenden Halbleiterlichtquellenelements reduzierter Leuchtstärke umfasst.

Ein vorteilhaftes Beispiel zeichnet sich dadurch aus, dass die Beleuchtungseinrichtung derart eingerichtet ist, dass wenigstens ein Teil der Bildpunkte zur Anzeige einer Rückleuchten- und/oder Bremsfunktion eine Aktivierung des jeweiligen zur Abstrahlung von rotem Licht ausgebildeten Halbleiterlichtquellenelements und eine Deaktivierung des jeweiligen zur Abstrahlung von gelbem Licht ausgebildeten Halbleiterlichtquellenelements bzw. insbesondere eine Aktivierung des zur jeweiligen Abstrahlung von gelbem Licht ausgebildeten Halbleiterlichtquellenelements mit gegenüber dem rotes Licht abstrahlenden jeweiligen Halbleiterlichtquellenelements reduzierter Leuchtstärke umfasst.

Ein vorteilhaftes Beispiel zeichnet sich dadurch aus, dass die Beleuchtungseinrichtung derart eingerichtet ist, dass wenigstens ein Teil der Bildpunkte zur Anzeige einer Rückwärtsfahrfunktion eine Aktivierung des jeweiligen ersten Halbleiterlichtquellenelements sowie eine Aktivierung des jeweiligen zur Abstrahlung von rotem Licht ausgebildeten Halbleiterlichtquellenelements und/oder eine Aktivierung des jeweiligen zur Abstrahlung von gelbem Licht ausgebildeten Halbleiterlichtquellenelements umfasst, so dass weißes Licht abgestrahlt wird.

Ein vorteilhaftes Beispiel zeichnet sich dadurch aus, dass die Beleuchtungseinrichtung derart eingerichtet ist, dass wenigstens ein Teil der Bildpunkte zur Anzeige einer Tagfahrlichtfunktion eine Aktivierung des jeweiligen ersten Halbleiterlichtquellenelements und/oder des jeweiligen zusätzlichen Halbleiterlichtquellenelements und eine Aktivierung des jeweiligen zur Abstrahlung von rotem Licht ausgebildeten Halbleiterlichtquellenelements und/oder des jeweiligen zur Abstrahlung von gelbem Licht ausgebildeten Halbleiterlichtquellenelements umfasst, so dass weißes Licht abgestrahlt wird.

Ein vorteilhaftes Beispiel zeichnet sich dadurch aus, dass eine Durchgangsoptik den Strahlengang des von den Halbleiterlichtquellenelementen abgestrahlten Lichts farbmischend und/oder fokussierend beeinflusst.

Vorteilhaft wird eine bessere Farbdurchmischung erreicht, wodurch das Erscheinungsbild der abgestrahlten Lichtverteilung verbessert wird.

Ein vorteilhaftes Beispiel zeichnet sich dadurch aus, dass die Durchgangsoptik eine Bildpunkt-bezogene Strukturierung aufweist.

Vorteilhaft kann mit dieser Strukturierung für jeden einzelnen Bildpunkt eine farbmischende Wirkung erzielt werden.

Ein vorteilhaftes Beispiel zeichnet sich dadurch aus, dass die Durchgangsoptik die Mehrzahl von Bildpunkten überdeckt.

Vorteilhaft ist die Durchgangsoptik so einfacher und günstiger herstellbar. Auch verbessert und vereinfacht sich die Befestigung im Vergleich zu pixel-individuellen Durchgangsoptiken.

Ein vorteilhaftes Beispiel zeichnet sich dadurch aus, dass der gemeinsame flächige Träger flexibel ausgebildet ist.

Vorteilhaft kann die Beleuchtungseinrichtung mit dem flexiblen Träger einfach an bestehenden dafür vorgesehenen insbesondere flächig gekrümmten Bereichen angeordnet werden.

Ein zweiter Aspekt dieser Beschreibung betrifft ein Kraftfahrzeug umfassend die Beleuchtungseinrichtung gemäß dem ersten Aspekt.

In der Zeichnung zeigen:
- Figur 1: eine perspektivisch dargestellte Verkehrssituation;
- Figur 2: eine Draufsicht auf eine Beleuchtungseinrichtung mit einer Vergrößerung eines Bildpunkts; und
- Figuren 3 bis 7: jeweils mittels der jeweiligen Beleuchtungseinrichtung erreichbare Farben anhand einer CIE-Normfarbtafel in schematischer Form.

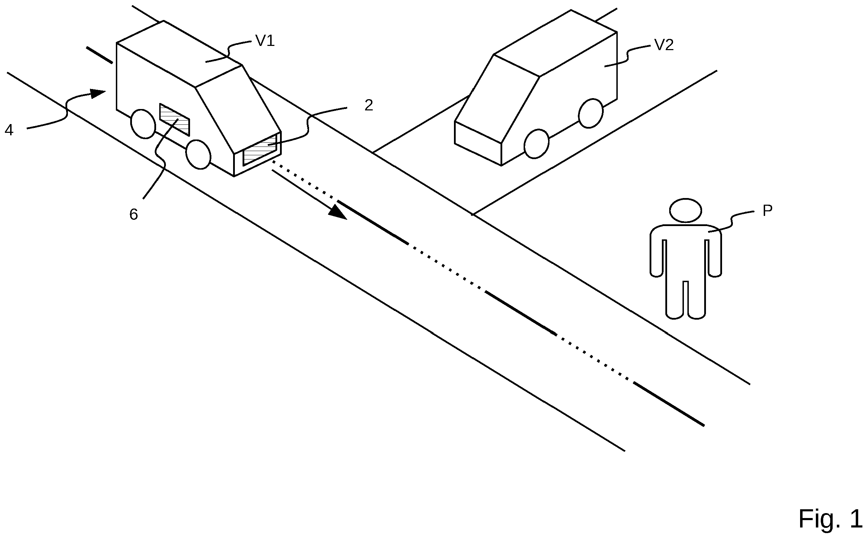

Figur 1 zeigt eine perspektivisch dargestellte Verkehrssituation. Ein autonom oder teilautonom fahrendes Kraftfahrzeug V1 nähert sich dem weiteren Kraftfahrzeug V2, welches sich an einer Einfahrt befindet, und einem Fußgänger P, welcher sich am Straßenrand befindet. Das Kraftfahrzeug V1 umfasst eine Beleuchtungseinrichtung 2 an der Fahrzeugfront, eine Beleuchtungseinrichtung 4 am Heck und eine Beleuchtungseinrichtung 6 an der Seite. Mittels der Beleuchtungseinrichtung 2, 4, 6 zeigt das Kraftfahrzeug V1 seinen teilautonomen oder autonomen Fahrzustand seiner Umgebung an.

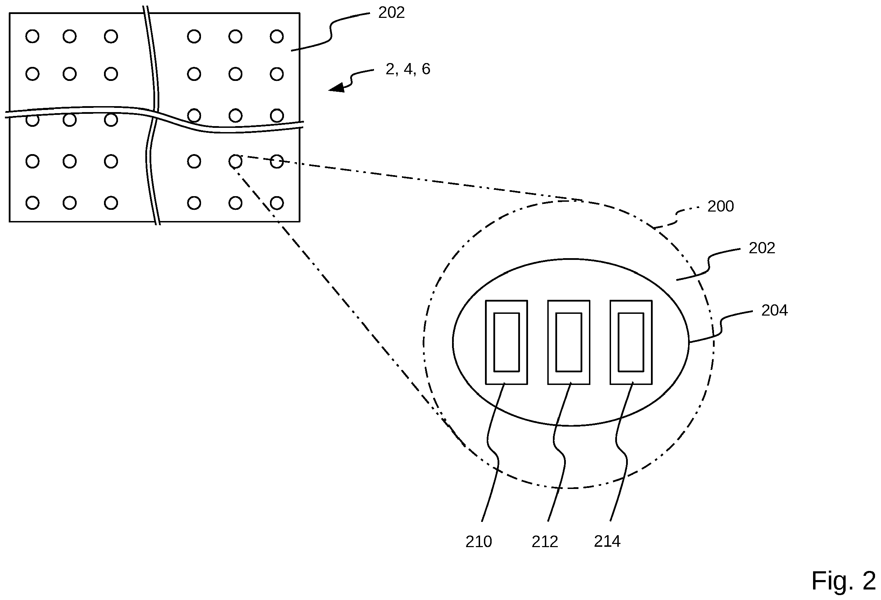

Figur 2 zeigt eine schematische Draufsicht auf die Beleuchtungseinrichtung 2, 4, 6 mit einer Vergrößerung eines Bildpunkts 200. Die flächige Beleuchtungseinrichtung 2, 4, 6 umfasst einen gemeinsamen flächigen Träger 202 wie beispielsweise eine flexible oder starre Leiterplatte. Auf dem Träger ist eine Mehrzahl von Bildpunkten 200 angeordnet. Diese Anordnung der Bildpunkte 200 ist beispielhaft matrixartig dargestellt.

### Die gezeigte Anordnung von drei

Halbleiterlichtquellenelementen 210, 212 und 214 als ein Bildpunkt 200 ist beispielhaft linear. Die Anordnung der Halbleiterlichtquellenelemente sollte aus Gründen der Homogenität bei der Farbmischung so kompakt wie möglich sein.

Neben der gezeigten linearen Anordnung sind selbstverständlich auch Anordnung im Dreieck oder andere Anordnungen denkbar. Insbesondere bilden die Bildpunkte nicht notwendigerweise in sich geschlossenen Bereiche, sondern können einander überlappend angeordnet sein.

Um Leuchtdichten zu erreichen, die eine parallele Nutzung als Signalleuchte im Kraftfahrzeug ermöglichen, können die Farben Blau, Türkis oder Cyan, und Gelb für den Front- und Seitenbereich und Rot, Türkis oder Cyan, und Gelb für den Bereich der Rückleuchte verwendet werden.

In beiden Fällen kann durch Schalten von zwei oder mehr LEDs eine Mischfarbe, z.B. Weiß, erzeugt werden.

Die Dimension der Beleuchtungseinrichtung 2, 4, 6 in Bildpunkten beginnt bei mehreren hundert Punkten, d.h. einer beispielsweise 20 x 30 Bildpunkte aufweisenden Beleuchtungseinrichtung 2, 4, 6, wobei ein Punkt im gezeigten Beispiel aus drei Halbleiterlichtquellenelementen besteht. Die Beleuchtungseinrichtung 2, 4, 6 kann selbstverständlich aber größer dimensioniert sein und bis zu mehrere tausend Bildpunkte oder eine noch höhere Auflösung bis zu mehreren Millionen Bildpunkten aufweisen.

Darüber hinaus ist die Darstellung der Abstände zwischen den Bildpunkten in Figur 2 nur beispielhaft. Die Abstände werden bevorzugt so klein wie möglich gewählt. Darüber hinaus kann die Anordnung der einzelnen Halbleiterlichtquellen, welche einem Bildpunkt zugeordnet sind, auch mit anderen Halbleiterlichtquellen anderer Bildpunkte verschränkt sein. Das bedeutet, dass es keine feste Abgrenzung unter Bildpunkten geben kann.

Es sind auch Konfigurationen denkbar, welche nur zwei Halbleiterlichtquellenelemente pro Bildpunkt aufweisen. Ein jeweiliger der Bildpunkte 200 umfasst also wenigstens ein individuell ansteuerbares erstes Halbleiterlichtquellenelement 210, welches zur Abstrahlung von Licht mit einer Farbe, welche insbesondere den autonomen oder teilautonomen Fahrzustand des Kraftfahrzeugs anzeigt, ausgebildet ist, und wenigstens ein individuell ansteuerbares und zur Abstrahlung von rotem oder gelbem Licht ausgebildetes zweites Halbleiterlichtquellenelement 212, 214.

Des Weiteren sind Ausführungen mit den gezeigten zwei oder vier Halbleiterlichtquellenelementen denkbar.

Zwischen einer Durchgangsoptik 204 und dem Träger 202 sind die Halbleiterlichtquellenelemente 210, 212, 214 angeordnet. Die Durchgangsoptik 204 verändert den Strahlengang des von den Elementen 210, 212 und 214 abgestrahlten Lichts. Die Durchgangsoptik 204 weist beispielsweise eine Bildpunkt-bezogene Strukturierung auf. Es ist also denkbar, zusätzlich noch eine Optik oder Mikrooptik im Sinne der Durchgangsoptik 204 vor den Elementen 210, 212 und 214 zu positionieren, um einen fokussierenden oder farb-mischenden Effekt zu erreichen. Denkbar sind hier Sammel- oder Zerstreuungslinsen, Mattscheiben oder aufwendigere Optiken wie zum Beispiel Wabenkondensoren oder Ähnliches.

Einzelne Halbleiterlichtquellenelemente 210, 212, 214 strahlen Licht mit einem stark begrenzten Wellenlängenbereich ab. Für die Farbe Türkis strahlt ein Halbleiterlichtquellenelement Licht mit einer Wellenlänge ab, welche im Wellenlängenbereich zwischen 500 nm und 520 nm liegt. Für die Farbe Cyan strahlt ein Halbleiterlichtquellenelement Licht mit einer Wellenlänge ab, welche im Wellenlängenbereich zwischen 470-500 nm liegt. Für die Farbe Rot strahlt ein Halbleiterlichtquellenelement Licht mit einer Wellenlänge ab, welche im Wellenlängenbereich zwischen 630 nm und 650 nm liegt. Für die Farbe Gelb strahlt ein Halbleiterlichtquellenelement Licht mit einer Wellenlänge ab, welche im Wellenlängenbereich zwischen 580 nm und 600 nm liegt. Für die Farbe Blau strahlt ein Halbleiterlichtquellenelement Licht mit einer Wellenlänge ab, welche im Wellenlängenbereich zwischen 410 nm und 440 nm liegt.

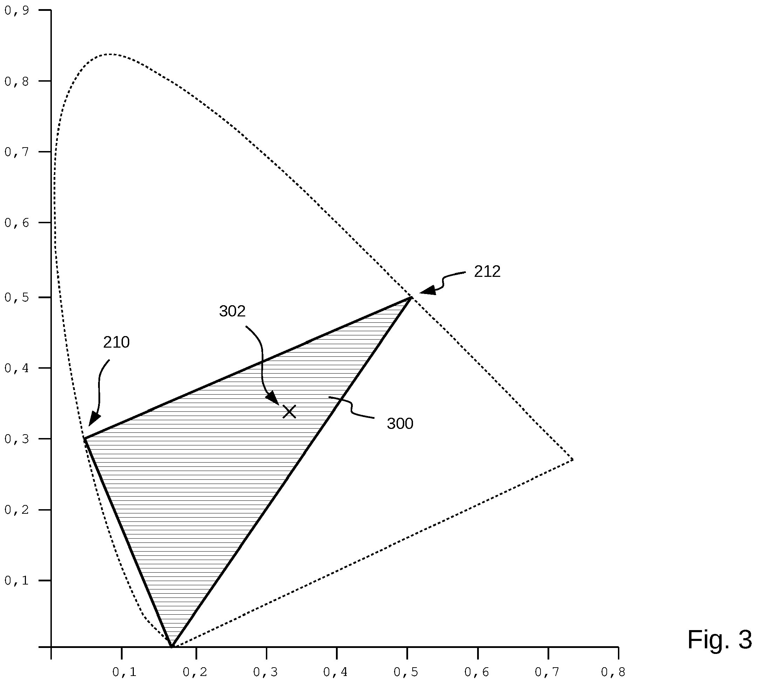

Die Beleuchtungseinrichtung 2, 4, 6 umfasst beispielweise ein nicht dargestelltes Steuergerät, welches die hier beschriebenen Funktionen realisiert. Beispielsweise empfängt das Steuergerät den Befehl, eine bestimmte Lichtfunktion, beispielsweise Blinken oder "autonomes Fahren anzeigen", darzustellen und steuert die einzelnen Halbleiterlichtquellenelemente entsprechend an. Diese Ansteuerung ist im Nachfolgenden beispielhaft beschrieben. Figur 3 zeigt mittels der Beleuchtungseinrichtung 2, 6 zur Anordnung im Vorderbereich oder der Seite des Fahrzeugs erreichbare Farben anhand einer CIE-Normfarbtafel in schematischer Form. Zum vereinfachten Verständnis sind die Bezugszeichen der den Bildpunkten zugeordneten Halbleiterlichtquellenelemente aus der Figur 2 in den Figuren 3 bis 7 eingezeichnet.

Der erreichbare Farbraum 300 wird vorliegend durch die von den in Figur 2 gezeigten Halbleiterlichtquellenelementen 210, 212 und 214 abstrahlbaren Lichtfarben Cyan oder Türkis, Gelb und Blau aufgespannt.

Um eine autonome oder teilautonome Fahrt des Kraftfahrzeugs anzuzeigen, werden wenigstens ein Teil der Bildpunkte so angesteuert, dass das jeweilige erste Halbleiterlichtquellenelement 210 und eine gleichzeitige Deaktivierung der anderen dem Bildpunkt zugehöriger Halbleiterlichtquellenelemente erfolgt. Dies gilt für alle nachfolgenden Beispiele. Selbstverständlich können die anderen Halbleiterlichtquellenelemente mit einer so geringen Intensität Licht abstrahlen, dass sie den Farbeindruck, der durch das Licht der ersten Halbleiterlichtquellenelement 210 bereitgestellt wird, nicht verfälschen.

Zur Anzeige einer Blinkleuchtenfunktion werden die hierfür ausgewählten Bildpunkte derart betrieben, dass das jeweilige zur Abstrahlung von gelbem Licht ausgebildete Halbleiterlichtquellenelement 212 aktiviert wird, wobei die anderen Halbleiterlichtquellenelemente gleichzeitig deaktiviert werden. Die Blinkleuchtenfunktion umfasst ein abwechselndes Ein- und Ausschalten des jeweiligen Halbleiterlichtquellenelements 212.

Eine Tagfahrlichtfunktion wird dadurch realisiert, dass eine Aktivierung des jeweiligen ersten Halbleiterlichtquellenelements 210 und/oder des jeweiligen zusätzlichen blau abstrahlenden

Halbleiterlichtquellenelements 214 und eine gleichzeitige Aktivierung des jeweiligen zur Abstrahlung von gelbem Licht ausgebildeten Halbleiterlichtquellenelements 212 umfasst, so dass weißes Licht abgestrahlt wird. Selbstverständlich ist bei Aktivierung beider Elemente 210 und 214 der gesamte Farbraum 300 wenigstes punktweise erreichbar, weshalb insbesondere eine Mehrzahl von Weißtönen für das Tagfahrlicht realisierbar sind. Beispielhaft ist ein Punkt 302 eingezeichnet, der weißes Licht repräsentiert und der der durch die Aktivierung von mehr als zwei LEDs pro Bildpunkt erreichen lässt.

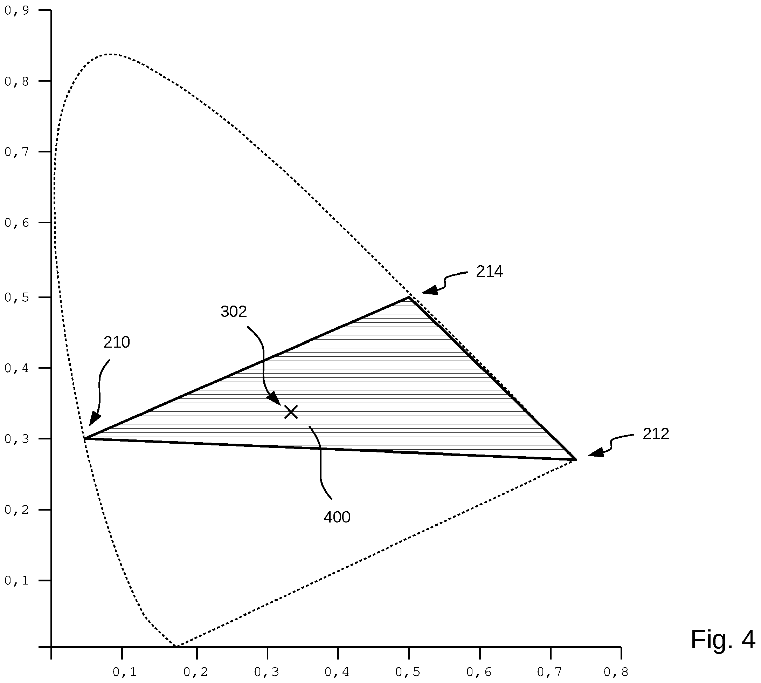

Figur 4 zeigt mittels der Beleuchtungseinrichtung 4 zur Anordnung im Heckbereich des Fahrzeugs erreichbare Farben anhand einer CIE-Normfarbtafel in schematischer Form. Der erreichbare Farbraum 400 wird durch die von den Halbleiterlichtquellenelementen 210, 212 und 214 abstrahlbaren Lichtfarben Cyan oder Türkis, Rot und Gelb aufgespannt.

Die Blinkleuchtenfunktion umfasst eine Aktivierung des jeweiligen zur Abstrahlung von gelbem Licht ausgebildeten Halbleiterlichtquellenelements 214. Gleichzeitig umfasst die Blinkleuchtenfunktion eine gleichzeitige Deaktivierung des jeweiligen zur Abstrahlung von rotem Licht ausgebildeten Halbleiterlichtquellenelements 212 bzw. eine gleichzeitige Aktivierung des jeweiligen zur Abstrahlung von rotem Licht ausgebildeten Halbleiterlichtquellenelements 212 mit gegenüber dem gelbes Licht abstrahlenden Halbleiterlichtquellenelements 214 reduzierter Leuchtstärke. Für die betroffenen Bildpunkte wird ebenfalls das erste Halbleiterlichtquellenelement 210 deaktiviert, da der Bildpunkt gelbes Licht abstrahlen soll.

Zum Anzeigen einer Rücklicht- oder Bremsfunktion ist die Beleuchtungseinrichtung 4 derart eingerichtet, dass wenigstens die betroffenen Bildpunkte eine Aktivierung des jeweiligen zur Abstrahlung von rotem Licht ausgebildeten Halbleiterlichtquellenelements 212 und insbesondere eine gleichzeitige Deaktivierung des jeweiligen zur Abstrahlung von gelbem Licht ausgebildeten Halbleiterlichtquellenelements 214 umfassen. Das erste Halbleiterlichtquellenelement 210 wird gleichzeitig deaktiviert.

Wenigstens ein Teil der Bildpunkte wird zur Anzeige der Rückwärtsfahrfunktion so betrieben, dass eine Aktivierung des jeweiligen ersten Halbleiterlichtquellenelements 210 sowie eine gleichzeitige Aktivierung des jeweiligen zur Abstrahlung von rotem Licht ausgebildeten Halbleiterlichtquellenelements 212 und/oder eine gleichzeitige Aktivierung des jeweiligen zur Abstrahlung von gelbem Licht ausgebildeten Halbleiterlichtquellenelements 214 umfasst, so dass weißes Licht abgestrahlt wird. Selbstverständlich kann eines der Elemente 214 oder 212 deaktiviert werden, um dennoch gemeinsam mit dem ersten Element 210 eine Abstrahlung von weißem Licht zu erreichen.

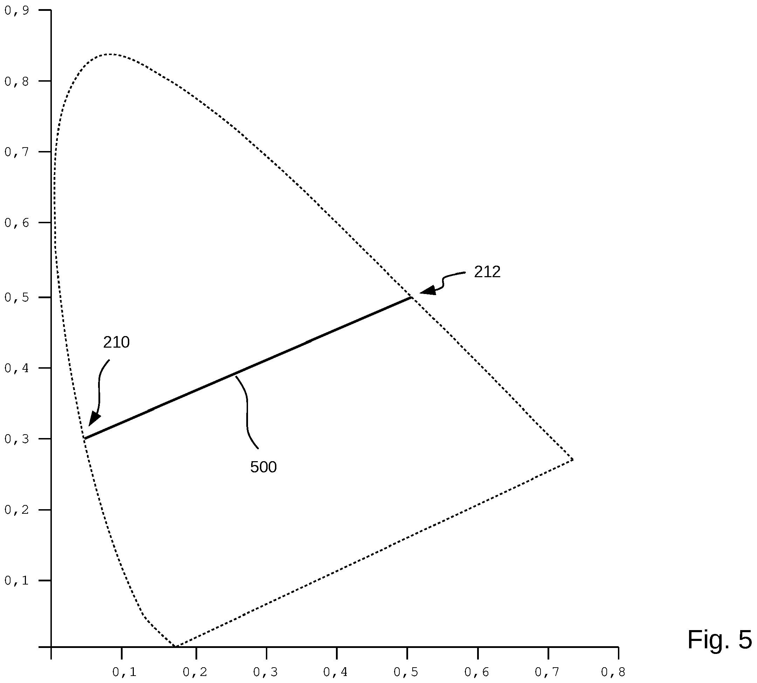

Figur 5 zeigt mittels der Beleuchtungseinrichtung 2 zur Anordnung im Frontbereich oder der Seite des Fahrzeugs erreichbare Farben anhand einer CIE-Normfarbtafel in schematischer Form. Der erreichbare Farbraum 500 verläuft entlang einer Linie und wird durch die von den Halbleiterlichtquellenelementen 210 und 212 abstrahlbaren Lichtfarben Cyan oder Türkis, und Gelb aufgespannt.

Zur Anzeige der autonomen oder teilautonomen Fahrt des Kraftfahrzeugs wird das erste Halbleiterlichtquellenelement 210 aktiviert, wobei das Halbleiterlichtquellenelement 212 deaktiviert bleibt. Für die Blinkleuchtenfunktion erfolgt in den lichtabstrahlenden Phasen eine Aktivierung des Elements 212 und eine gleichzeitige Deaktivierung des Elements 210. Für eine Abstrahlung eines weißen Lichts also beispielsweise eines Tagfahrlichts werden beide Elemente 210 und 212 zu einer Abstrahlung von gemischt weiß erscheinendem Licht betrieben.

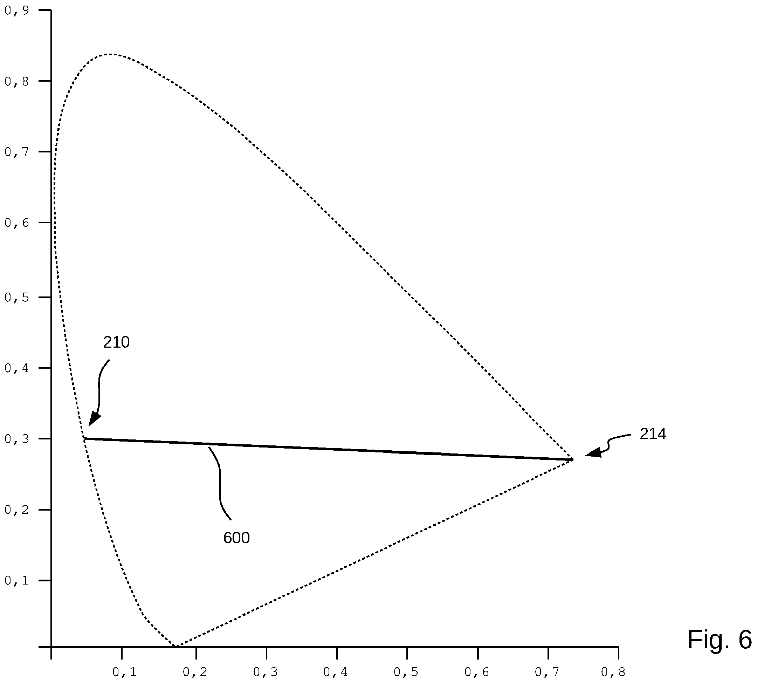

Figur 6 zeigt mittels der Beleuchtungseinrichtung 4 zur Anordnung im Heckbereich des Fahrzeugs erreichbare Farben anhand einer CIE-Normfarbtafel in schematischer Form. Der erreichbare Farbraum 600 verläuft entlang einer Linie und wird durch die von den Halbleiterlichtquellenelementen 210, 214 abstrahlbaren Lichtfarben aufgespannt.

Zur Anzeige der autonomen oder teilautonomen Fahrt des Kraftfahrzeugs wird das erste Halbleiterlichtquellenelement 210 aktiviert, wobei das Halbleiterlichtquellenelement 212 gleichzeitig deaktiviert ist. Für die Anzeige der Rückleuchtenfunktion oder Bremsfunktion erfolgt eine Aktivierung des Elements 214 und eine gleichzeitige Deaktivierung des Elements 210. Für eine Abstrahlung eines Weiß erscheinenden Lichts werden beide Elemente 210 und 214 zu einer Abstrahlung von Licht gleichzeitig betrieben.

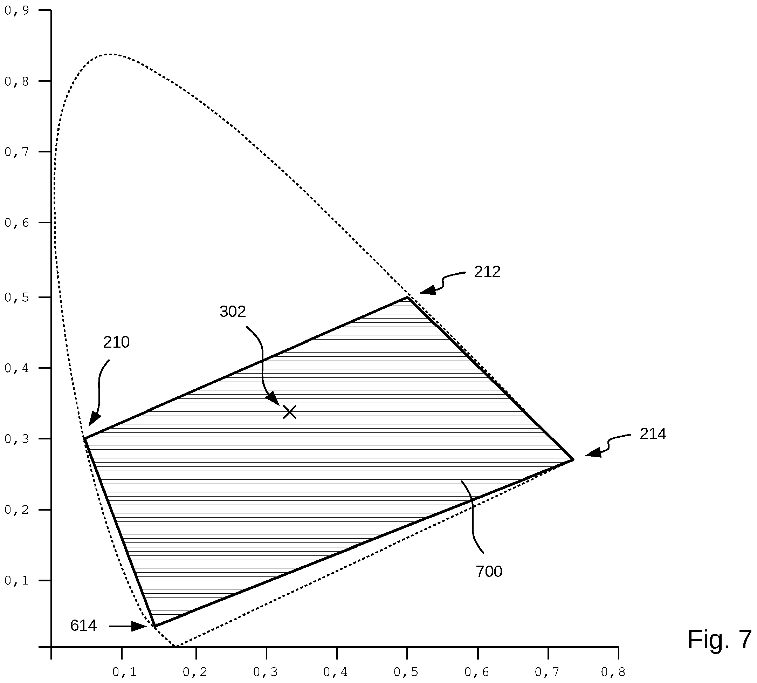

Figur 7 zeigt mittels der Beleuchtungseinrichtung 4 zur Anordnung im Heckbereich, Frontbereich oder an der Seite des Fahrzeugs erreichbare Farben anhand einer CIE-Normfarbtafel in schematischer Form. Der erreichbare Farbraum 700 wird durch die von den Halbleiterlichtquellenelementen 210, 212, 214 und 218 abstrahlbaren Lichtfarben aufgespannt. Das Halbleiterlichtquellenelement 218 ist eingerichtet, um blaues Licht abzustrahlen. Zum Betrieb wird auf die Beschreibung der vorigen Figuren verwiesen.

## Patentansprüche

1. Eine flächige Beleuchtungseinrichtung (2; 4; 6) für ein autonom oder teilautonom fahrbares Kraftfahrzeug (V1), **dadurch gekennzeichnet, dass** die flächige Beleuchtungseinrichtung (2; 4; 6) einen gemeinsamen flächigen Träger (202) und eine Mehrzahl von wenigstens 20x30 matrixartig auf dem gemeinsamen flächigen Träger (202) angeordneten Bildpunkten (200) umfasst, wobei ein jeweiliger der Bildpunkte (200) umfasst:
ein individuell ansteuerbares erstes
Halbleiterlichtquellenelement (210) zum Bereitstellen einer Kommunikationsfunktion, welches zur Abstrahlung von Licht der Farbe Türkis mit einer Wellenlänge im Wellenlängenbereich zwischen 500-520 nm oder von Licht der Farbe Cyan mit einer Wellenlänge im Wellenlängenbereich zwischen 470-500 nm, welche den autonomen oder teilautonomen Fahrzustand des Kraftfahrzeugs (V1) anzeigt, ausgebildet ist, und ein individuell ansteuerbares und zur Abstrahlung von rotem oder gelbem Licht ausgebildetes zweites Halbleiterlichtquellenelement (212; 214) zum Bereitstellen einer Leuchtenfunktion, wobei eine Leuchtenfunktion eine Blinkleuchtenfunktion oder eine Rückleuchten- und/oder Bremsfunktion ist.

2. Die flächige Beleuchtungseinrichtung (2; 4; 6) gemäß dem Anspruch 1, wobei ein jeweiliger der Bildpunkte (200) umfasst:
ein individuell ansteuerbares und zur Abstrahlung von gelbem oder rotem Licht ausgebildetes weiteres Halbleiterlichtquellenelement (214; 212).

3. Die Beleuchtungseinrichtung (2; 4; 6) gemäß dem Anspruch 1, wobei ein jeweiliger der Bildpunkte (200) umfasst:
ein individuell ansteuerbares und zur Abstrahlung von blauem Licht ausgebildetes zusätzliches Halbleiterlichtquellenelement (214; 614).

4. Die Beleuchtungseinrichtung (200) gemäß einem der vorigen Ansprüche, wobei die Halbleiterlichtquellenelemente (210, 212, 214) jeweils einzeln dimmbar ausgebildet sind.

5. Die Beleuchtungseinrichtung (2; 4; 6) gemäß einem der vorigen Ansprüche, wobei die Beleuchtungseinrichtung (2; 4; 6) derart eingerichtet ist, dass wenigstens ein Teil der Bildpunkte zur Anzeige einer autonomen oder teilautonomen Fahrt des Kraftfahrzeugs eine Aktivierung des jeweiligen ersten Halbleiterlichtquellenelements (210) und eine gleichzeitige Deaktivierung der andere dem Bildpunkt zugehöriger Halbleiterlichtquellenelemente umfasst.

6. Die Beleuchtungseinrichtung (2; 4; 6) gemäß einem der vorigen Ansprüche, wobei die Beleuchtungseinrichtung (2; 4; 6) derart eingerichtet ist, dass wenigstens ein Teil der Bildpunkte zur Anzeige einer Blinkleuchtenfunktion eine Aktivierung des jeweiligen zur Abstrahlung von gelbem Licht ausgebildeten Halbleiterlichtquellenelements (214; 212) und insbesondere eine gleichzeitige Deaktivierung des jeweiligen zur Abstrahlung von rotem Licht ausgebildeten Halbleiterlichtquellenelements (212, 214) bzw. gleichzeitige Aktivierung des jeweiligen zur Abstrahlung von rotem Licht ausgebildeten Halbleiterlichtquellenelements (212; 215) mit gegenüber dem gelbes Licht abstrahlenden Halbleiterlichtquellenelements (214; 212) reduzierter Leuchtstärke umfasst.

7. Die Beleuchtungseinrichtung (4) gemäß einem der vorigen Ansprüche, wobei die Beleuchtungseinrichtung (4) derart eingerichtet ist, dass wenigstens ein Teil der Bildpunkte zur Anzeige einer Rückleuchten- und/oder Bremsfunktion eine Aktivierung des jeweiligen zur Abstrahlung von rotem Licht ausgebildeten Halbleiterlichtquellenelements (212; 214) und insbesondere eine gleichzeitige Deaktivierung des jeweiligen zur Abstrahlung von gelbem Licht ausgebildeten Halbleiterlichtquellenelements (214; 212) bzw. gleichzeitige Aktivierung des zur jeweiligen Abstrahlung von gelbem Licht ausgebildeten Halbleiterlichtquellenelements (214; 212) mit gegenüber dem rotes Licht abstrahlenden jeweiligen Halbleiterlichtquellenelements (212; 214) reduzierter Leuchtstärke umfasst.

8. Die Beleuchtungseinrichtung (4) gemäß einem der vorigen Ansprüche, wobei die Beleuchtungseinrichtung (4) derart eingerichtet ist, dass wenigstens ein Teil der Bildpunkte zur Anzeige einer Rückwärtsfahrfunktion eine Aktivierung des jeweiligen ersten Halbleiterlichtquellenelements (210) sowie eine gleichzeitige Aktivierung des jeweiligen zur Abstrahlung von rotem Licht ausgebildeten Halbleiterlichtquellenelements (212; 214) und/oder eine gleichzeitige Aktivierung des jeweiligen zur Abstrahlung von gelbem Licht ausgebildeten Halbleiterlichtquellenelements (214; 212) umfasst, so dass weißes Licht abgestrahlt wird.

9. Die Beleuchtungseinrichtung (2) gemäß einem der vorigen Ansprüche, wobei die Beleuchtungseinrichtung (2) derart eingerichtet ist, dass wenigstens ein Teil der Bildpunkte zur Anzeige einer Tagfahrlichtfunktion eine Aktivierung des jeweiligen ersten Halbleiterlichtquellenelements (210) und/oder des jeweiligen zusätzlichen Halbleiterlichtquellenelements (214) und eine gleichzeitige Aktivierung des jeweiligen zur Abstrahlung von rotem Licht ausgebildeten Halbleiterlichtquellenelements (212; 214) und/oder des jeweiligen zur Abstrahlung von gelbem Licht ausgebildeten Halbleiterlichtquellenelements (214; 212) umfasst, so dass weißes Licht abgestrahlt wird.

10. Die Beleuchtungseinrichtung (2; 4; 6) gemäß einem der vorigen Ansprüche, wobei eine Durchgangsoptik (204) den Strahlengang des von den Halbleiterlichtquellenelementen (210, 212, 214) abgestrahlten Lichts farbmischend und/oder fokussierend beeinflusst.

11. Die Beleuchtungseinrichtung (2; 4; 6) gemäß dem Anspruch 9, wobei die Durchgangsoptik (204) eine Bildpunkt-bezogene Strukturierung aufweist.

12. Die Beleuchtungseinrichtung (2; 4; 6) gemäß dem Anspruch 9, wobei die Durchgangsoptik (214) die Mehrzahl von Bildpunkten überdeckt.

13. Die Beleuchtungseinrichtung (2; 4; 6) gemäß einem der vorigen Ansprüche, wobei der gemeinsame flächige Träger (202) flexibel ausgebildet ist.

14. Ein Kraftfahrzeug (V1) umfassend die Beleuchtungseinrichtung (2; 4; 6) gemäß einem der vorigen Ansprüche.

## Claims

1. A planar lighting device (2; 4; 6) for an autonomously or semi-autonomously drivable motor vehicle (V1), **characterized in that** the planar lighting device (2; 4; 6) comprises a common planar carrier (202) and a plurality of at least 20x30 pixels (200) which are arranged in a matrix on the common planar carrier (202), each one of the pixels (200) comprising:
a first individually controllable semiconductor light source element (210) for providing a communication function, which is designed to emit turquoise-colored light at a wavelength in the wavelength range of between 500-520 nm or cyan-colored light at a wavelength in the wavelength range of between 470-500 nm, indicating the autonomous or semi-autonomous driving state of the motor vehicle (V1), and
a second individually controllable semiconductor light source element (212; 214) for providing a lighting function, which is designed to emit red or yellow light, a lighting function being an indicator light function or a tail light and/or braking function.

2. The planar lighting device (2; 4; 6) according to claim 1, wherein each one of the pixels (200) comprises:
a further individually controllable semiconductor light source element (214; 212) which is designed to emit yellow or red light.

3. The lighting device (2; 4; 6) according to claim 1, wherein each one of the pixels (200) comprises:
an additional individually controllable semiconductor light source element (214; 614) which is designed to emit blue light.

4. The lighting device (200) according to any of the preceding claims, wherein the semiconductor light source elements (210, 212, 214) are each individually dimmable.

5. The lighting device (2; 4; 6) according to any of the preceding claims, wherein the lighting device (2; 4; 6) is configured such that at least one part of the pixels for displaying autonomous or semi-autonomous driving of the motor vehicle comprises activating each first semiconductor light source element (210) and simultaneously deactivating the other semiconductor light source elements associated with the pixel.

6. The lighting device (2; 4; 6) according to any of the preceding claims, wherein the lighting device (2; 4; 6) is configured such that at least one part of the pixels for displaying an indicator light function comprises activating each semiconductor light source element (214; 212) which is designed to emit yellow light and in particular simultaneously deactivating each semiconductor light source element (212, 214) which is designed to emit red light or simultaneously activating each semiconductor light source element (212; 215) which is designed to emit red light at a reduced light intensity compared to the semiconductor light source element (214; 212) emitting yellow light.

7. The lighting device (4) according to any of the preceding claims, wherein the lighting device (4) is configured such that at least one part of the pixels for displaying a tail light and/or braking function comprises activating each semiconductor light source element (212; 214) which is designed to emit red light and in particular simultaneously deactivating each semiconductor light source element (214; 212) which is designed to emit yellow light or simultaneously activating each semiconductor light source element (214; 212) which is designed to emit yellow light at a reduced light intensity compared to the semiconductor light source element (212; 214) emitting red light.

8. The lighting device (4) according to any of the preceding claims, wherein the lighting device (4) is configured such that at least one part of the pixels for displaying a reversing function comprises activating each first semiconductor light source element (210) and simultaneously activating each semiconductor light source element (212; 214) which is designed to emit red light and/or simultaneously activating each semiconductor light source element (214; 212) which is designed to emit yellow light so that white light is emitted.

9. The lighting device (2) according to any of the preceding claims, wherein the lighting device (2) is configured such that at least one part of the pixels for displaying a daytime driving light function comprises activating each first semiconductor light source element (210) and/or each additional semiconductor light source element (214) and simultaneously activating each semiconductor light source element (212; 214) which is designed to emit red light and/or each semiconductor light source element (214; 212) which is designed to emit yellow light so that white light is emitted.

10. The lighting device (2; 4; 6) according to any of the preceding claims, wherein through-passage optics (204) influence the beam path of the light emitted by the semiconductor light source elements (210, 212, 214) in a color-mixing and/or focusing manner.

11. The lighting device (2; 4; 6) according to claim 9, wherein the through-passage optics (204) have pixel-related structuring.

12. The lighting device (2; 4; 6) according to claim 9, wherein the through-passage optics (214) cover the plurality of pixels.

13. The lighting device (2; 4; 6) according to any of the preceding claims, wherein the common planar carrier (202) is flexible.

14. A motor vehicle (V1) comprising the lighting device (2; 4; 6) according to any of the preceding claims.

## Revendications

1. Dispositif d'éclairage (2; 4; 6) plan pour un véhicule automobile (V1) à conduite autonome ou semi-autonome, **caractérisé en ce que** le dispositif d'éclairage (2; 4; 6) plan comprend un support plan commun (202) et une pluralité d'au moins 20 x 30 points d'image (200) disposés à la manière d'une matrice sur le support plan commun (202), dans lequel un point d'image respectif parmi les points d'image (200) comprend:
un premier élément formant source de lumière à semi-conducteurs (210) pouvant être commandé individuellement pour la fourniture d'une fonction de communication, lequel est configuré pour émettre de la lumière de couleur turquoise avec une longueur d'onde dans la plage de longueurs d'onde comprise entre 500 et 520 nm ou de la lumière de couleur cyan avec une longueur d'onde dans la plage de longueurs d'onde comprise entre 470 et 500 nm, laquelle lumière indique l'état de conduite autonome ou semi-autonome du véhicule automobile (V1), et
un second élément formant source de lumière à semi-conducteurs (212; 214) pouvant être commandé individuellement et configuré pour émettre de la lumière rouge ou jaune pour la fourniture d'une fonction de feu, dans lequel une fonction de feu est une fonction de feu clignotant ou une fonction de feu arrière et/ou de freinage.

2. Dispositif d'éclairage (2; 4; 6) plan selon la revendication 1, dans lequel un point d'image respectif parmi les points d'image (200) comprend:
un autre élément formant source de lumière à semi-conducteurs (214; 212) pouvant être commandé individuellement et configuré pour émettre de la lumière jaune ou rouge.

3. Dispositif d'éclairage (2; 4; 6) selon la revendication 1, dans lequel un point d'image respectif parmi les points d'image (200) comprend:
un élément formant source de lumière à semi-conducteurs supplémentaire (214; 614) pouvant être commandé individuellement et configuré pour émettre de la lumière bleue.

4. Dispositif d'éclairage (200) selon l'une des revendications précédentes, dans lequel les éléments formant sources de lumière à semi-conducteurs (210, 212, 214) sont respectivement configurés de manière à pouvoir varier en intensité individuellement.

5. Dispositif d'éclairage (2; 4; 6) selon l'une des revendications précédentes, dans lequel le dispositif d'éclairage (2; 4; 6) est réalisé de telle sorte qu'au moins une partie des points d'image pour l'indication d'une conduite autonome ou semi-autonome du véhicule automobile comprennent l'activation du premier élément formant source de lumière à semi-conducteurs (210) respectif et la désactivation simultanée des autres éléments formant sources de lumière à semi-conducteurs associés au point d'image.

6. Dispositif d'éclairage (2; 4; 6) selon l'une des revendications précédentes, dans lequel le dispositif d'éclairage (2; 4; 6) est réalisé de telle sorte qu'au moins une partie des points d'image pour l'indication d'une fonction de feu clignotant comprend l'activation de l'élément formant source de lumière à semi-conducteurs (214; 212) respectif configuré pour émettre de la lumière jaune et en particulier la désactivation simultanée de l'élément formant source de lumière à semi-conducteurs (212, 214) respectif configuré pour émettre de la lumière rouge ou l'activation simultanée de l'élément formant source de lumière à semi-conducteurs (212; 215) respectif configuré pour émettre de la lumière rouge avec une intensité lumineuse réduite par rapport à celle de l'élément formant source de lumière à semi-conducteurs (214; 212) émettant de la lumière jaune.

7. Dispositif d'éclairage (4) selon l'une des revendications précédentes, dans lequel le dispositif d'éclairage (4) est configuré de telle sorte qu'au moins une partie des points d'image pour l'indication d'une fonction de feu arrière et/ou de freinage comprend l'activation de l'élément formant source de lumière à semi-conducteurs (212; 214) respectif configuré pour émettre de la lumière rouge et en particulier la désactivation simultanée de l'élément formant source de lumière à semi-conducteurs (214; 212) respectif configuré pour émettre de la lumière jaune ou l'activation simultanée de l'élément formant source de lumière à semi-conducteurs (214; 212) respectif configuré pour émettre de la lumière jaune avec une intensité lumineuse réduite par rapport à celle de l'élément formant source de lumière à semi-conducteurs (212; 214) respectif émettant de la lumière rouge.

8. Dispositif d'éclairage (4) selon l'une des revendications précédentes, dans lequel le dispositif d'éclairage (4) est réalisé de telle sorte qu'au moins une partie des points d'image pour l'indication d'une fonction de marche arrière comprend l'activation du premier élément formant source de lumière à semi-conducteurs (210) respectif ainsi que l'activation simultanée de l'élément formant source de lumière à semi-conducteurs (212; 214) respectif configuré pour émettre de la lumière rouge et/ou l'activation simultanée de l'élément formant source de lumière à semi-conducteurs (214; 212) respectif configuré pour émettre de la lumière jaune, de sorte qu'une lumière blanche est émise.

9. Dispositif d'éclairage (2) selon l'une des revendications précédentes, dans lequel le dispositif d'éclairage (2) est réalisé de telle sorte qu'au moins une partie des points d'image pour l'indication d'une fonction d'éclairage de jour comprend l'activation du premier élément formant source de lumière à semi-conducteurs (210) respectif et/ou de l'élément formant source de lumière à semi-conducteurs supplémentaire (214) respectif et l'activation simultanée de l'élément formant source de lumière à semi-conducteurs (212; 214) respectif configuré pour émettre de la lumière rouge et/ou de l'élément formant source de lumière à semi-conducteurs (214; 212) respectif configuré pour émettre de la lumière jaune, de sorte qu'une lumière blanche est émise.

10. Dispositif d'éclairage (2; 4; 6) selon l'une des revendications précédentes, dans lequel une optique traversante (204) influence le trajet des rayons de la lumière émise par les éléments formant sources de lumière à semi-conducteurs (210, 212, 214) de manière à mélanger les couleurs et/ou à les focaliser.

11. Dispositif d'éclairage (2; 4; 6) selon la revendication 9, dans lequel l'optique traversante (204) présente une structure liée aux points d'image.

12. Dispositif d'éclairage (2; 4; 6) selon la revendication 9, dans lequel l'optique traversante (214) recouvre la pluralité de points d'image.

13. Dispositif d'éclairage (2; 4; 6) selon l'une des revendications précédentes, dans lequel le support plat commun (202) est conçu de manière à être flexible.

14. Véhicule automobile (V1) comprenant le dispositif d'éclairage (2; 4; 6) selon l'une des revendications précédentes.
